# EUROPEAN PATENT APPLICATION

(11) **EP 2 549 469 A1**
(43) Date of publication of application: **23.01.2013**
(21) Application number: 11800329.2
(22) Date of filing: 11.04.2011
(51) Int. Cl.: G09G 3/36, G02F 1/133, G09G 3/20, G09G 3/34

(54) **LIQUID CRYSTAL DISPLAY APPARATUS AND SCAN BACKLIGHT CONTROL METHOD**

(30) Priority: 28.06.2010 JP 2010146714
(71) Applicant: Sharp Kabushiki Kaisha, Osaka-shi, Osaka 545-8522 (JP)
(72) Inventor: UENO, Tetsuya, Osaka-shi Osaka 545-8522 (JP)
(74) Representative: Müller-Boré & Partner Patentanwälte
(86) International application number: PCT/JP2011/002135
(87) International publication number: WO 2012/001850

(57) **Abstract**

A liquid crystal display device employing a scanning backlight scheme which reduces the degradation of display quality is provided. An image formation region is divided into a plurality of regions S₁-Sₙ corresponding to scanning lines, where the region S₁ corresponds to the uppermost scanning line, the region Sₙ corresponds to the lowermost scanning line, and n is a natural number of three or more. The liquid crystal display device includes a backlight 150 having a plurality of light emitting units configured to illuminate the respective regions. The light emitting units are turned on in synchronization with timings of writing a data signal. In the liquid crystal display device with the scanning backlight scheme, turn-on timings of the light emitting units of the regions S₁-Sᵢ (i is a natural number of 1 ≤ i < n) are caused to be later than the respective timings of writing data in the regions. Turn-off timings of the light emitting units of the regions Sₙ-Sⱼ (j is a natural number of 1 ≤ i < j ≤ n) are caused to be earlier than the respective timings of writing data in the regions.

## Description

### TECHNICAL FIELD

The present invention relates to liquid crystal display devices employing a scanning backlight scheme, and methods for controlling a scanning backlight.

### BACKGROUND ART

Liquid crystal display devices are a hold-type or non-stroboscopic display. Therefore, when a moving image is displayed, a smearing or ghosting artifact may occur. The smearing or ghosting artifact is a phenomenon that, for example, when a white ball is moving in the black background, a gray shadow appears in the wake of the white ball. A state in which the smearing or ghosting artifact is present is called a motion blur. This does not occur in cathode ray tube (CRT) displays, which are an impulse-type or stroboscopic display.

In order to reduce the motion blur, the backlight may be intermittently turned on. For example, as described in PATENT DOCUMENTS 1-3, a scanning backlight scheme is known in which a backlight is divided into a plurality of regions, and the regions are successively turned on.

### CITATION LIST

### PATENT DOCUMENT

PATENT DOCUMENT 1: Japanese Patent Publication No. 2007-123233
PATENT DOCUMENT 2: Japanese Patent Publication No. 2009-063751
PATENT DOCUMENT 3: Japanese Patent Publication No. 2009-133956

### SUMMARY OF THE INVENTION

### TECHNICAL PROBLEM

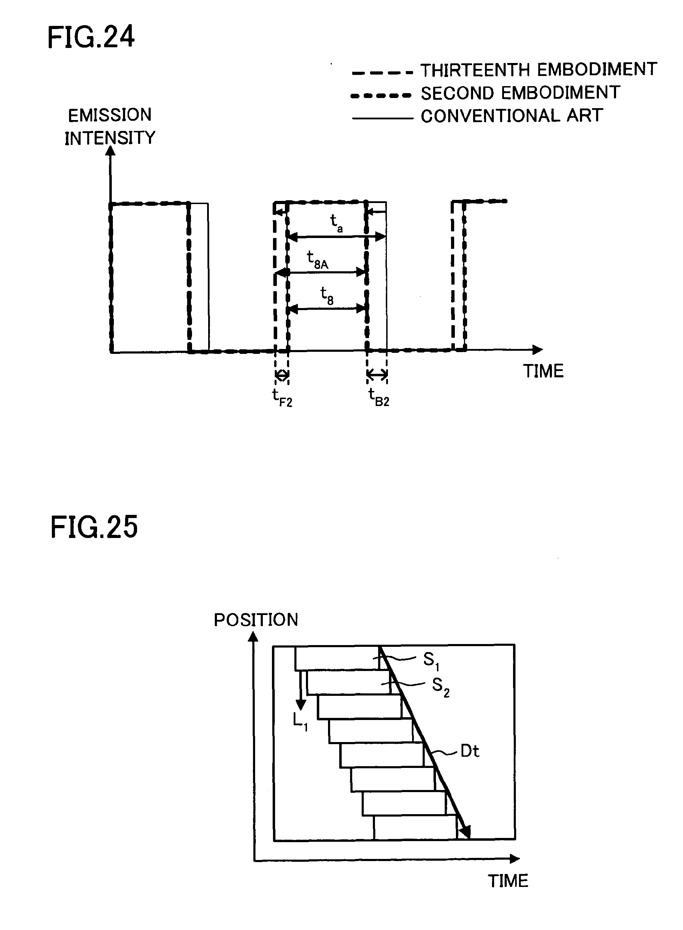

FIG. 25 is a diagram for describing a process for the turn-on timing of a light source in the conventional scanning backlight scheme. Examples of the light source include an LED, a CCFL, an HCFL, an organic EL, etc. As shown in FIG. 25, in the conventional scanning backlight scheme, LEDs for regions S₁-S₈ corresponding to the uppermost to lowermost scanning lines, which are obtained by dividing an image formation region, are turned on/off in a region-by-region basis in synchronization with timings of writing image data schematically indicated by an arrow Dt. In FIG. 25, the reference character S₁ indicates the uppermost position, and the reference character S₂ indicates the second uppermost position. Therefore, for example, leakage light L₁ from the region S₁ to the region S₂ occurs.

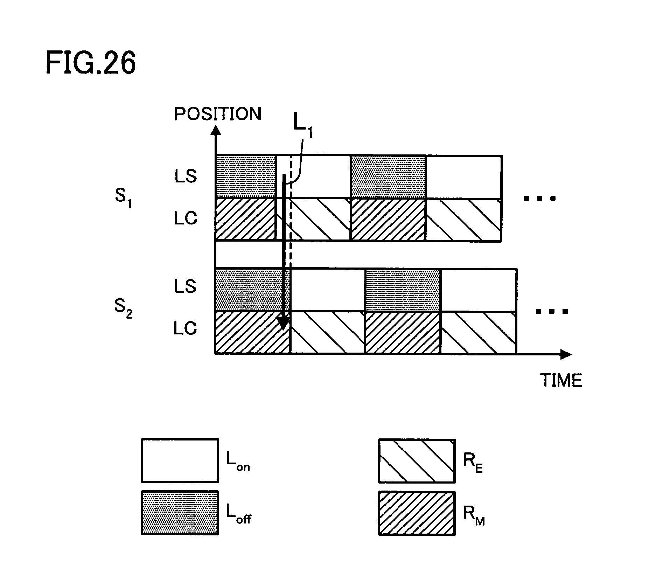

FIG. 26 is a diagram for describing an influence of the leakage light from the region S₁ into the region S₂. In FIG. 26, a reference character LS indicates a light source, a reference character LC indicates liquid crystal, a reference character Lₒₙ indicates that the light source is on, a reference character L_{off} indicates that the light source is off, a reference character R_{E} indicates that the response of liquid crystal has been finished, and a reference character R_{M} indicates that liquid crystal is responding. As shown in FIG. 26, in each of the regions S₁ and S₂, when the response of liquid crystal has been finished, the LED is on, and when liquid crystal is responding, the LED is off. Therefore, when the LED of the region S₁ is on, the light L₁ leaks into the region S₂, the region S₃, etc. As a result, because liquid crystal is responding in the region S₂, the region S₃, etc., the light leaking into the region S₂, the region S₃, etc., adversely affects display in the region S₂, the region S₃, etc. In the region S₂ adjacent to the region S₁, the response period of liquid crystal almost ends, and therefore, the influence is relatively small. However, as one progresses away from the region S₁ to the region S₃, the region S₄, etc., illumination occurs at a timing closer to the midpoint of the response period, resulting in a greater influence on display. Specifically, when the leakage light from the uppermost region S₁ reaches the lowermost region, the timing offset is greatest, resulting in a most adverse influence on display.

Such leakage light is generated not only by the LEDs of upper regions, but also by the LEDs of lower regions. The presence of leakage light causes mixture of images of successive frames, disadvantageously resulting in a degradation in display quality.

The present invention has been made in view of the above problem. It is an object of the present invention to provide a liquid crystal display device employing a scanning backlight scheme which reduces the degradation of display quality, and a method for controlling a scanning backlight.

### SOLUTION TO THE PROBLEM

In order to achieve the object, in the present invention, a delayed turn-on process of delaying turn-on timings of a predetermined number of uppermost regions, or an advanced turn-off process of advancing turn-off timings of a predetermined number of lowermost regions, is performed.

Specifically, a liquid crystal display device according to a first aspect of the present invention is a liquid crystal display device with a scanning backlight scheme including a light source having a plurality of light emitting units configured to illuminate a plurality of respective regions S₁-Sₙ obtained by dividing an image formation region, corresponding to scanning lines, where the region S₁ corresponds to the uppermost scanning line, the Sₙ region corresponds to the lowermost scanning line, n is a natural number of three or more, and the light emitting units corresponding to the respective regions are turned on on a region-by-region basis during respective predetermined on periods between respective reference turn-on timings and respective reference turn-off timings of the light emitting units in synchronization with respective timings of writing image data. The device includes a timing controller configured to perform a delayed turn-on process of causing turn-on timings of the light emitting units of the regions S₁-Sᵢ, where i is a natural number of 1 ≤ i < n, to be later than the respective reference turn-on timings, or an advanced turn-off process of causing turn-off timings of the light emitting units of the regions Sₙ-Sⱼ, where j is a natural number of 1 ≤ i < j ≤ n, to be earlier than the respective reference turn-off timings. As used herein, the reference turn-on timing refers to a turn-on timing which is used as a reference when the light emitting unit of each region is turned on. As used herein, the reference turn-off timing refers to a turn-off timing which is used as a reference when the light emitting unit of each region is turned off.

With this configuration, leakage light from the light emitting units of the regions S₁-Sᵢ into lower regions, or leakage light from the light emitting units of the regions Sₙ-Sⱼ into upper regions, can be reduced. Therefore, light illumination during the start or end of response of liquid crystal can be reduced, and light illumination is performed when liquid crystal is in the stable response state. As a result, the degradation of display quality due to mixture of successive frame images can be reduced.

In the delayed turn-on process, the timing controller preferably delays the turn-on timings of the light emitting units of the regions S₁-Sᵢ so that the turn-on timings of the light emitting units of the regions S₁-Sᵢ are the same as the turn-on timing of the light emitting unit of the Sᵢ₊₁ region.

With this configuration, leakage light from the light emitting units of the regions S₁-Si into lower regions can be reliably reduced. Therefore, light illumination during the start of response of liquid crystal can be further reduced, whereby the degradation of display quality can be further reduced.

In the advanced turn-off process, the timing controller preferably advances the turn-off timings of the light emitting units of the Sₘ-Sⱼ regions so that the turn-off timings of the light emitting units of the regions Sₙ-Sⱼ are the same as the turn-off timing of the light emitting unit of the Sⱼ₋₁ region.

With this configuration, leakage light from the light emitting units of the regions Sₙ-Sⱼ ino upper regions can be reliably reduced. Therefore, light illumination during the end of response of liquid crystal can be further reduced, whereby the degradation of display quality can be further reduced.

The number i may be one, i.e., the region Sᵢ is the region S₁. With this configuration, leakage light from the light emitting unit of the region S₁ which has a most adverse influence on lower regions can be reduced.

The number j may be n, i.e., the region Sⱼ is the region Sₙ. With this configuration, leakage light from the light emitting unit of the region Sₙ which has a most adverse influence on upper regions can be reduced.

The timing controller preferably causes emission intensities of the light emitting units of the regions S₁-Sᵢ to be higher than emission intensities of the light emitting units of the other regions. The on periods of the light emitting units of the regions S₁-Sᵢ are reduced because the respective turn-on timings are delayed, and therefore, the amount of light emitted decreases. With this configuration, the emission intensities of the light emitting units of the regions S₁-Sᵢ are increased, whereby the decrease of the amount of light emitted can be reduced or prevented.

The emission intensity of the light emitting unit of the Sᵢ region is preferably a maximum of tₐ/tᵢ times as high as the emission intensities of the light emitting units of the other regions, where tₐ is the predetermined on period, and tᵢ is an on period of the light emitting unit of the Sᵢ region. As used herein, the predetermined on period tₐ refers to a period of time during which the light emitting unit of the light source is on. In order to uniformly illuminate the entire panel with light of the light source, all rows have equal predetermined on periods. The on period of the region Sᵢ is shorter than the normal on period tₐ, and therefore, the amount of light emitted in the region Sᵢ is tᵢ/tₐ times as high as that in the normal regions. With this configuration, however, the emission intensity of the region Sᵢ is increased by a factor of a maximum of tₐ/tᵢ, whereby the decrease of the amount of light emitted in the region Sᵢ can be reliably reduced or prevented.

The timing controller preferably causes emission intensities of the light emitting units of the regions Sₙ-Sⱼ to be higher than emission intensities of the light emitting units of the other regions. The on periods of the light emitting units of the regions Sₙ-Sⱼ are reduced because the respective turn-off timings are delayed, and therefore, the amount of light emitted decreases. With this configuration, however, the emission intensities of the light emitting units of the regions Sₙ-Sⱼ are increased, whereby the decrease of the amount of light emitted can be reduced or prevented.

The emission intensity of the light emitting unit of the Sⱼ region is preferably a maximum of tₐ/tⱼ times as high as the emission intensities of the light emitting units of the other regions, where tₐ is the predetermined on period, and tⱼ is an on period of the light emitting unit of the Sⱼ region. The on period of the region Sⱼ is shorter than the normal on period tₐ, and therefore, the amount of light emitted in the region Sⱼ is tⱼ/tₐ times as high as that in the normal regions. With this configuration, however, the emission intensity of the region Sᵢ is increased by a factor of a maximum of tₐ/tⱼ, whereby the decrease of the amount of light emitted in the region Sⱼ can be reliably reduced or prevented.

The timing controller preferably causes the turn-off timings of the light emitting units of the regions S₁-Sᵢ to be later than the respective reference turn-off timings. The on periods of the light emitting units of the regions S₁-Sᵢ are reduced because the respective turn-on timings are delayed, and therefore, the amount of light emitted decreases. With this configuration, the turn-off timings are delayed, and therefore, the on periods are supplemented, whereby the decrease of light emitted can be reduced or prevented.

In this configuration, times by which the turn-off timings of the light emitting units of the regions S₁-Sᵢ are delayed are preferably shorter than respective times by which the turn-on timings of the light emitting units of the regions S₁-Sᵢ are delayed. With this configuration, the decrease of light emitted can be reliably reduced or prevented while leakage light into lower regions due to the delayed turn-off timings is reliably reduced or prevented.

The timing controller preferably causes the turn-on timings of the light emitting units of the regions Sₙ-Sⱼ to be earlier than the respective reference turn-off timings. The on periods of the light emitting units of the regions Sₙ-Sⱼ are reduced because the respective turn-off timings are advanced, and therefore, the amount of light emitted decreases. With this configuration, the turn-on timings are advanced, and therefore, the on periods are supplemented, whereby the decrease of light emitted can be reduced or prevented.

In this configuration, times by which the turn-on timings of the light emitting units of the regions Sₙ-Sⱼ are advanced are preferably shorter than respective times by which the turn-off timings of the light emitting units of the regions Sₙ-Sⱼ are advanced. With this configuration, the decrease of light emitted can be reliably reduced or prevented while leakage light into upper regions due to the advanced turn-on timings is reliably reduced or prevented.

A scanning backlight controlling method according to a second aspect of the present invention is a method for controlling a scanning backlight in a liquid crystal display device including a light source having a plurality of light emitting units configured to illuminate a plurality of respective regions S₁-Sₙ obtained by dividing an image formation region, corresponding to scanning lines, where the region S₁ corresponds to the uppermost scanning line, the Sₙ region corresponds to the lowermost scanning line, n is a natural number of three or more, and the light emitting units corresponding to the respective regions are turned on on a region-by-region basis during respective predetermined on periods between respective reference turn-on timings and respective reference turn-off timings of the light emitting units in synchronization with respective timings of writing image data. A delayed turn-on process of causing turn-on timings of the light emitting units of the regions S₁-Sᵢ, where i is a natural number of 1 ≤ i < n, to be later than the respective reference turn-on timings, or an advanced turn-on process of causing turn-off timings of the light emitting units of the regions Sₙ-Sⱼ, where j is a natural number of 1 ≤ i < j ≤ n, to be earlier than the respective reference turn-off timings, is performed.

According to the present invention, the turn-on timings of a predetermined number of uppermost regions are delayed so that leakage light into lower regions is reduced, or the turn-off timings of a predetermined number of lowermost regions are advanced so that leakage light into upper regions is reduced, whereby the degradation of display quality can be reduced.

### ADVANTAGES OF THE INVENTION

According to the present invention, light illumination during the start or end of response of liquid crystal can be reduced, whereby the degradation of display quality can be reduced.

### BRIEF DESCRIPTION OF THE DRAWINGS

[FIG. 1] FIG. 1 is a block diagram showing a configuration of a liquid crystal display device according to a first embodiment.
[FIG. 2] FIG. 2 is a diagram for describing an image formation region of the liquid crystal display device of the first embodiment.
[FIG. 3] FIG. 3 is a diagram for describing a process of delaying a turn-on timing of an LED of a region S₁.
[FIG. 4] FIG. 4 is a diagram for describing the principle of reduction of leakage light from the region S₁ into a region S₂.
[FIG. 5] FIG. 5 is a diagram for describing a process of advancing a turn-off timing of an LED of a region S₈.
[FIG. 6] FIG. 6 is a diagram for describing the principle of reduction of leakage light from the region S₈ into a region S₇.
[FIG. 7] FIG. 7 is a diagram for describing a process of delaying the turn-on timing of the LED of the region S₁, and in addition, advancing the turn-off timing of the LED of the region S₈.
[FIG. 8] FIG. 8 is a diagram for describing a process of delaying the turn-on timings of the LEDs of the regions S₁ and S₂.
[FIG. 9] FIG. 9 is a diagram for describing a liquid crystal display device which displays 3D video which is viewed using optical shutter glasses.
[FIG. 10] FIG. 10 is a diagram for describing that the timing of writing image data to liquid crystal is asynchronous with the timing of switching the optical shutter glasses between the light transmission mode (on) and the light non-transmission mode (off).
[FIG. 11] FIG. 11 is a diagram for describing the timing of writing image data to liquid crystal and the timing of switching the optical shutter glasses between the light transmission mode (on) and the light non-transmission mode (off), where the turn-on timings of the regions S₁ and S₂ are delayed.
[FIG. 12] FIG. 12 is a diagram for describing a process of advancing the turn-off timings of the LEDs of the regions S₈ and S₇.
[FIG. 13] FIG. 13 is a diagram for describing the timing of writing image data to liquid crystal and the timing of switching the optical shutter glasses between the light transmission mode (on) and the light non-transmission mode (off), where the turn-off timings of the regions S₈ and S₇ are advanced.
[FIG. 14] FIG. 14 is a diagram for describing a process of delaying the turn-on timings of the LEDs of the regions S₁ and S₂, and in addition, advancing the turn-off timings of the LEDs of the regions S₈ and S₇.
[FIG. 15] FIG. 15 is a diagram for describing the timing of writing image data to liquid crystal and the timing of switching the optical shutter glasses between the light transmission mode (on) and the light non-transmission mode (off), where the turn-on timings of the regions S₁ and S₂ are delayed, and in addition, the turn-off timings of the regions S₈ and S₇ are advanced.
[FIG. 16] FIG. 16 is a diagram for describing a process of delaying the turn-on timings of the LEDs of the regions S₁ and S₂.
[FIG. 17] FIG. 17 is a diagram for describing a process of advancing the turn-off timings of the LEDs of the regions S₈ and S₇.
[FIG. 18] FIG. 18 is a diagram for describing a process of delaying the turn-on timings of the LEDs of the regions S₁ and S₂, and in addition, advancing the turn-off timings of the LEDs of the regions S₈ and S₇.
[FIG. 19] FIG. 19 is a diagram for describing the decrease of the amount of light emitted in the region S₁ which occurs when the turn-on timing of the LED of the region S₁ is delayed.
[FIG. 20] FIG. 20 is an explanatory diagram schematically showing the emission intensity of the LED of the region S₁ in the conventional art, the emission intensity of the LED of the region S₁ in the first embodiment, and the emission intensity of the LED of the region S₁ in a tenth embodiment, for the purpose of comparison.
[FIG. 21] FIG. 21 is a diagram for describing that when the turn-off timing of the LED of the region S₈ is advanced, the amount of light emitted in the region S₈ is reduced.
[FIG. 22] FIG. 22 is an explanatory diagram schematically showing the emission intensity of the LED of the region S₈ in the conventional art, the emission intensity of the LED of the region S₈ in a second embodiment, and the emission intensity of the LED of the region S₈ in an eleventh embodiment, for the purpose of comparison.
[FIG. 23] FIG. 23 is an explanatory diagram schematically showing the emission intensity of the LED of the region S₁ in the conventional art, the emission intensity of the LED of the region S₁ in the first embodiment, and the emission intensity of the LED of the region S₁ in a twelfth embodiment, for the purpose of comparison.
[FIG. 24] FIG. 24 is an explanatory diagram schematically showing the emission intensity of the LED of the region S₈ in the conventional art, the emission intensity of the LED of the region S₈ in the second embodiment, and the emission intensity of the LED of the region S₈ in a thirteenth embodiment, for the purpose of comparison.
[FIG. 25] FIG. 25 is a diagram for describing a process for the turn-on timing of a light source in the conventional scanning backlight scheme.
[FIG. 26] FIG. 26 is a diagram for describing an influence of leakage light from the region S₁ into the region S₂.

### DESCRIPTION OF EMBODIMENTS

Embodiments of the present invention will be specifically described hereinafter with reference to the accompanying drawings. The embodiments are for the purpose of facilitating understanding of the principle of the present invention. The scope of the present invention is not intended to be limited to the embodiments. Those skilled in the art will make replacements or modifications to the embodiments when necessary without departing the scope of the present invention.

### (First Embodiment)

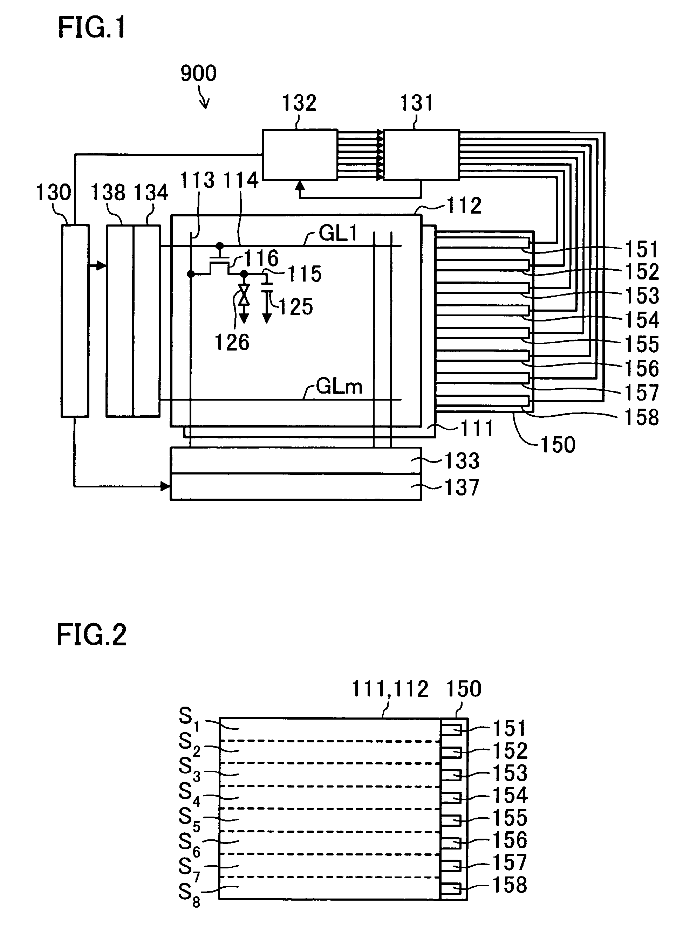

FIG. 1 is a block diagram showing a configuration of a liquid crystal display device 900 according to a first embodiment. FIG. 2 is a diagram for describing an image formation region of the liquid crystal display device 900 of the first embodiment. The configuration of the liquid crystal display device 900 will be described with reference to FIGS. 1 and 2.

As shown in FIG. 1, the liquid crystal display device 900 includes an array substrate 111 and a counter substrate 112 (transparent substrates) facing each other with a liquid crystal layer 126 being interposed therebetween (i.e., the array substrate 111 and the counter substrate 112 are separated from each other by a predetermined distance). A counter electrode (common electrode) (not shown) is formed on the counter substrate 112. The array substrate 111 and the counter substrate 112 are not particularly limited, but may be, for example, a substrate which can transmit light, such as a glass plate, a quartz plate, etc. The liquid crystal layer 126 is not particularly limited, but may be, for example, of the following types: twisted nematic (TN); guest-host (GH); super-twisted nematic (STN); super-twisted birefringence effect (SBE); electrically controlled birefringence (ECB); etc.

The array substrate 111 includes a plurality of scanning lines 114 (from GL1 (uppermost line) to GLm (lowermost line) arranged in a scan direction). A plurality of data lines 113 are also provided, intersecting with the scanning lines 114. A pixel electrode 115 is provided in each of pixel regions arranged in a matrix and separated by the data lines 113 and the scanning lines 114. The pixel electrode 115 and the counter electrode are formed of a light-transmissive conductive material, such as indium tin oxide (ITO), etc. A thin film transistor (TFT) 116 is provided as a switching element in the vicinity of each of intersection portions of the scanning lines 114 and the data lines 113. The source electrode of the thin film transistor 116 is connected to the data line 113, the gate electrode is connected to the scanning line 114, and the drain electrode is connected to the pixel electrode 115 facing a storage capacitor 125 and the liquid crystal layer 126.

The data lines 113 are connected to a data driver 133 and a data line drive circuit 137. The scanning lines 114 are connected to a gate driver 134 and a scanning line drive circuit 138. The data line drive circuit 137 and the scanning line drive circuit 138 are connected to and controlled by a control circuit 130. An external data signal is input to the control circuit 130 to generate, based on vertical and horizontal synchronization signals, a clock signal for inputting data to the data driver 133 and a clock signal for changing the scanning lines.

As shown in FIG. 2, the image formation region of the liquid crystal display device 900 is divided into a plurality of regions S₁-Sₙ extending along the horizontal scanning lines GL1 (uppermost scanning line) to GLm (lowermost scanning line). In this embodiment, there are eight regions S₁-S₈.

A backlight 150 is provided on the back side of the array substrate 111, facing the array substrate 111. The backlight 150 is used to illuminate an entire region of the back surface of the liquid crystal display device 900. The backlight 150 includes a plurality of light emitting units. Each light emitting unit is provided for a corresponding one of the regions S₁-S₈ in order to illuminate that region. In this embodiment, the backlight 150 includes eight direct-type LEDs 151-158 as the light emitting units. The direct-type LEDs 151-158 correspond to the regions S₁-S₈, respectively.

As shown in FIG. 1, the LEDs are connected to a lamp drive circuit 131 and a drive voltage timing control circuit (timing controller) 132. The drive voltage timing control circuit 132 controls timings of turning on or off the LEDs. Specifically, the drive voltage timing control circuit 132 performs a delayed turn-on process of causing the turn-on timings of the light emitting units of the regions S₁-Sᵢ to be later than respective reference turn-on timings, or an advanced turn-off process of causing the turn-off timings of the light emitting units of the regions Sₙ-Sⱼ to be earlier than respective reference turn-off timings, where i and j are natural numbers satisfying 1 ≤ i < j ≤ 8. Note that, if i is one, only the turn-on timing of the LED of the region S₁ is delayed. If j is eight, only the turn-on timing of the LED of the region S₈ is advanced. Both the delayed turn-on process and the advanced turn-off process can be simultaneously performed.

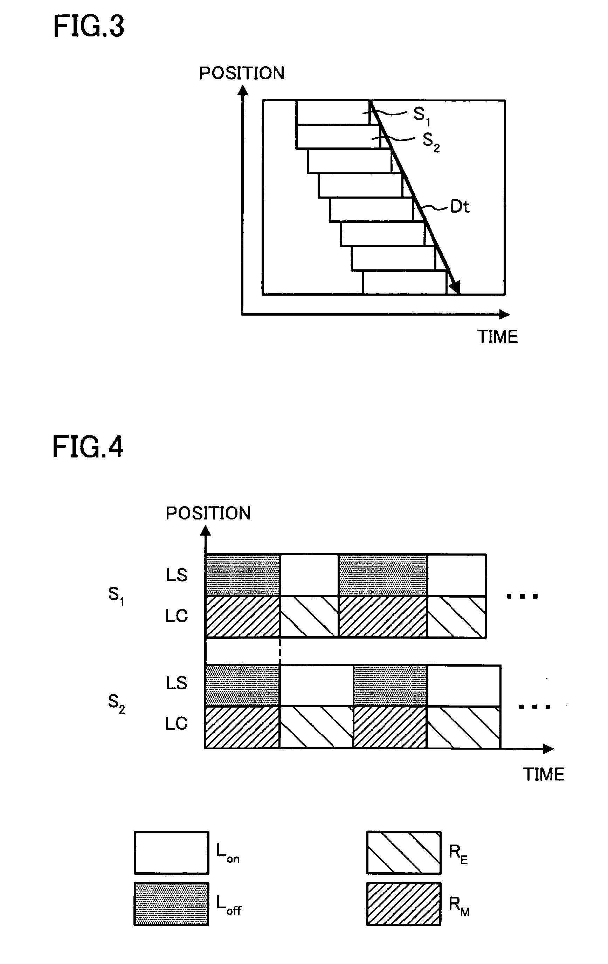

Next, operation of the liquid crystal display device 900 thus configured will be described with reference to FIGS. 1, 3, and 4. FIG. 3 is a diagram for describing the process of delaying the turn-on timing of the LED of the region S₁. In FIG. 3, a reference character S₁ indicates the uppermost region, and a reference character S₂ indicates the second uppermost region. FIG. 4 is a diagram for describing the principle of reduction of leakage light from the region S₁ into the region S₂. In FIG. 4, a reference character LS indicates a light source, a reference character LC indicates liquid crystal, a reference character Lₒₙ indicates that the light source is on, a reference character L_{off} indicates that the light source is off, a reference character R_{E} indicates that the response of liquid crystal has been finished, and a reference character R_{M} indicates that liquid crystal is responding. This holds true for the description that follows.

As shown in FIG. 1, the data driver 133 starts operation of a shift register simultaneously with the rise of a start pulse, and performs operation while receiving a clock signal. Data input simultaneously with the clock signal is stored into a sampling memory selected by the shift register. When display data for all horizontal lines has been transferred, the control circuit 130 outputs a latch pulse. When the data driver 133 receives the latch pulse, a hold memory simultaneously latches the data stored in the sampling memory. D/A conversion is performed on the latched data, and the resulting data is output to the data lines 113. An on-voltage is applied to one of the scanning lines 114, so that all the thin film transistors 116 on the corresponding one row are turned on, whereby one line of data is displayed. By repeatedly performing the above operation in a similar manner, all the scanning lines 114 are scanned and driven in the order of from GL1 to GLm.

When a scanning line control signal is successively supplied to the scanning lines GL1-GLm, the lamp drive circuit 131 turns on the LED corresponding to the scanning line 114 to which the scanning line control signal has been supplied. Thus, the LEDs 151-158 are successively turned on. As shown in FIG. 3, the drive voltage timing control circuit 132 causes the turn-on timing of the LED of the region S₁ to be later than the reference turn-on timing so that the turn-on timing of the LED of the region S₁ is the same as that of the LED of the region S₂. Specifically, as shown in FIG. 4, if the regions S₁ and S₂ have the same turn-on timing, the adverse influence on display of the leakage light from the region S₁ into the region S₂ and the following regions is reduced or eliminated, whereby the degradation of display quality can be reduced. As one progresses away from the region S₁, illumination by the leakage light from the region S₁ occurs at a timing closer to the midpoint of the response period, resulting in a greater influence on display. When the leakage light from the region S₁ reaches the lowermost region, the timing offset is greatest, resulting in a most adverse influence on display. According to this embodiment, the leakage light from the region S₁, which causes such a problem, can be reduced.

Note that, in this embodiment, the regions S₁ and S₂ have the same turn-on timing, and therefore, the on period of the LED of the region S₁ decreases, so that the amount of light reduction of the on period to some extent is preferable because the power consumption of the backlight can be reduced, and is also not substantially disadvantageous, because it is at an end portion of the screen that the luminance decreases.

### (Second Embodiment)

In the first embodiment, the turn-on timing of the uppermost region S₁ is delayed. The present invention is not limited to such an embodiment. In a second embodiment, the turn-off timing of the lowermost region S₈ is advanced.

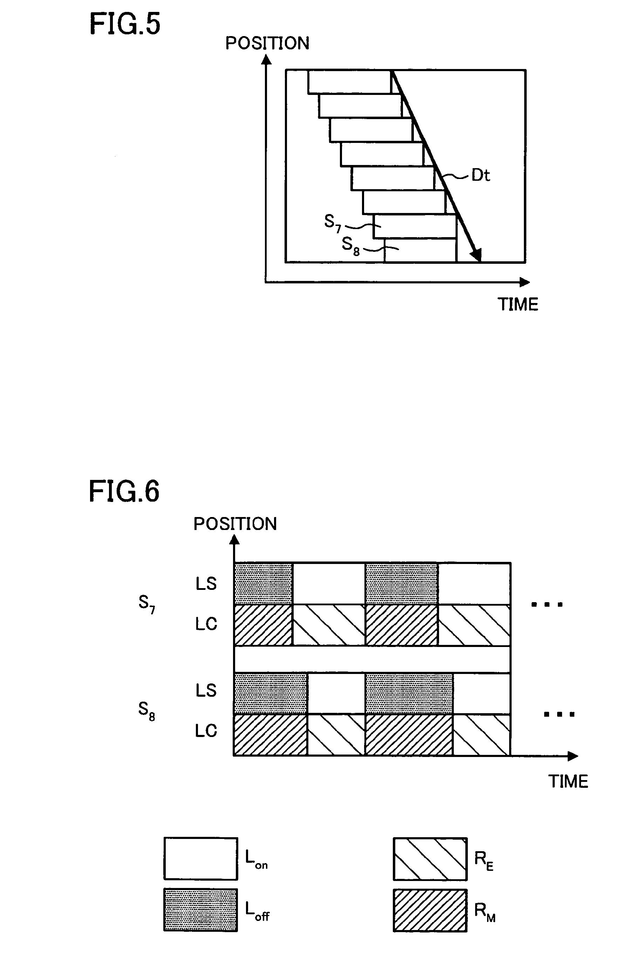

FIG. 5 is a diagram for describing a process of advancing the turn-off timing of the LED of the region S₈. FIG. 6 is a diagram for describing the principle of reduction of leakage light from the region S₈ into the region S₇.

As shown in FIG. 5, in the second embodiment, the turn-off timing of the LED of the region S₈ is caused to be earlier than the reference turn-off timing so that the turn-off timing of the LED of the region S₈ is the same as the turn-off timing of the LED of the region S₇. Specifically, as shown in FIG. 6, if the region S₈ has the same turn-off timing as that of the region S₇, the adverse influence on display of leakage light from the region S₈ into the region S₇ is reduced or eliminated, whereby the degradation of display quality can be reduced. As one progresses away from the region S₈, illumination by the leakage light from the region S₈ occurs at a timing closer to the midpoint of the response period, resulting in a greater influence on display. When the leakage light from the region S₈ reaches the uppermost region, the timing offset is greatest, resulting in a most adverse influence on display. According to this embodiment, the leakage light from the region S₈, which causes such a problem, can be reduced.

Note that, in this embodiment, similar to the first embodiment, the on period of the LED of the region S₈ decreases, and therefore, the luminance of the region S₈ decreases. However, for a reason similar to that of the first embodiment, the reduction of the on period to some extent is not substantially disadvantageous.

### (Third Embodiment)

In the first embodiment, the turn-on timing of the uppermost region S₁ is delayed, and in the second embodiment, the turn-off timing of the lowermost region S₈ is advanced. The present invention is not limited to such embodiments. In a third embodiment, the turn-on timing of the region S₁ is delayed, and in addition, the turn-off timing of the region S₈ is advanced.

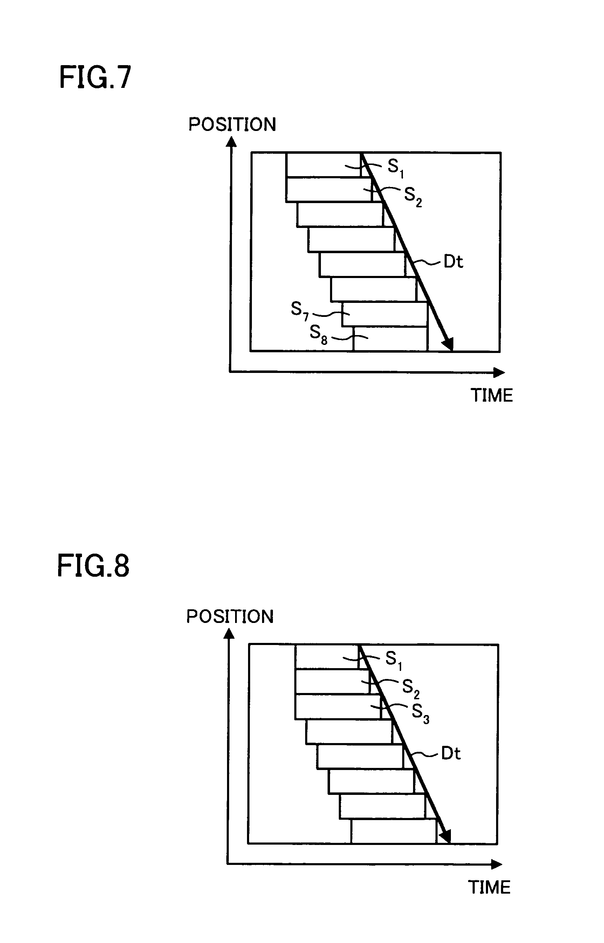

FIG. 7 is a diagram for describing a process of delaying the turn-on timing of the LED of the region S₁, and in addition, advancing the turn-off timing of the LED of the region S₈. As shown in FIG. 7, the turn-on timing of the LED of the region S₁ is caused to be later than the reference turn-on timing so that the turn-on timing of the LED of the region S₁ is the same as the turn-on timing of the LED of the region S₂, and in addition, the turn-off timing of the LED of the region S₈ is caused to be earlier than the reference turn-off timing so that the turn-off timing of the LED of the region S₈ is the same as the turn-off timing of the LED of the region S₇. As a result, leakage light from the region S₁ into the region S₂ can be reduced, and in addition, leakage light from the region S₈ into the region S₇ can be reduced, whereby the degradation of display quality can be further reduced.

### (Fourth Embodiment)

In the first embodiment, the turn-on timing of the uppermost region S₁ is delayed. The present invention is not limited to such an embodiment. In a fourth embodiment, the turn-on timings of the LEDs of a plurality of regions including the uppermost region S₁ are delayed. Specifically, the turn-on timings of the LEDs of the region S₁ and the region S₂ are delayed.

FIG. 8 is a diagram for describing a process of delaying the turn-on timings of the LEDs of the regions S₁ and S₂. As shown in FIG. 8, the turn-on timings of the LEDs of the regions S₁ and S₂ are caused to be later than the respective reference turn-on timings so that the turn-on timings of the LEDs of the regions S₁ and S₂ are the same as the turn-on timing of the LED of the region S₃. As a result, leakage light from the regions S₁ and S₂ into the region S₃ can be reduced, whereby the degradation of display quality can be further reduced.

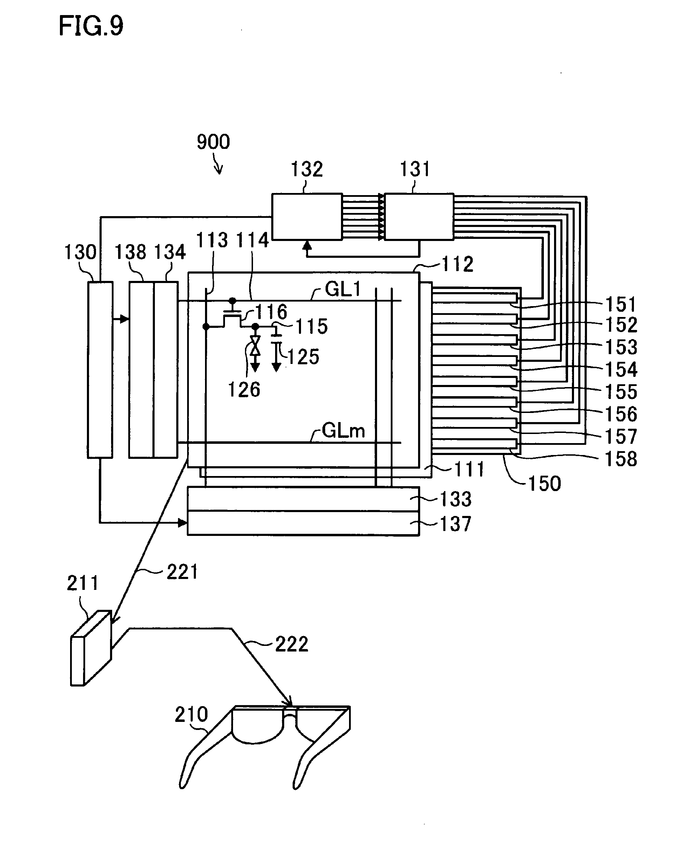

Next, a case where the scanning backlight driving technique of this embodiment is applied to a liquid crystal display device which displays 3D video which is viewed using optical shutter glasses, will be described. FIG. 9 is a diagram for describing the liquid crystal display device 900 which displays 3D video which is viewed using optical shutter glasses. As shown in FIG. 9, the optical shutter glasses 210 includes components for the left and right eyes which have a function of switching between a light transmission mode (on) and a light non-transmission mode (off) to transmit or block image light from the liquid crystal display device 900 so that the left and right eyes are allowed to view only particular images. The liquid crystal display device 900 includes a switch controller which switches the optical shutter glasses 210 between the light transmission mode (on) and the light non-transmission mode (off) in synchronization with image cycles. Specifically, the liquid crystal display device 900 includes an optical shutter glasses control circuit 211. The optical shutter glasses control circuit 211 receives a synchronization signal 221 from the liquid crystal display device 900, and transmits a shutter glasses control signal 222 to the optical shutter glasses 210, to switch the optical shutter glasses 210 between the light transmission mode and the light non-transmission mode in synchronization with the image cycles.

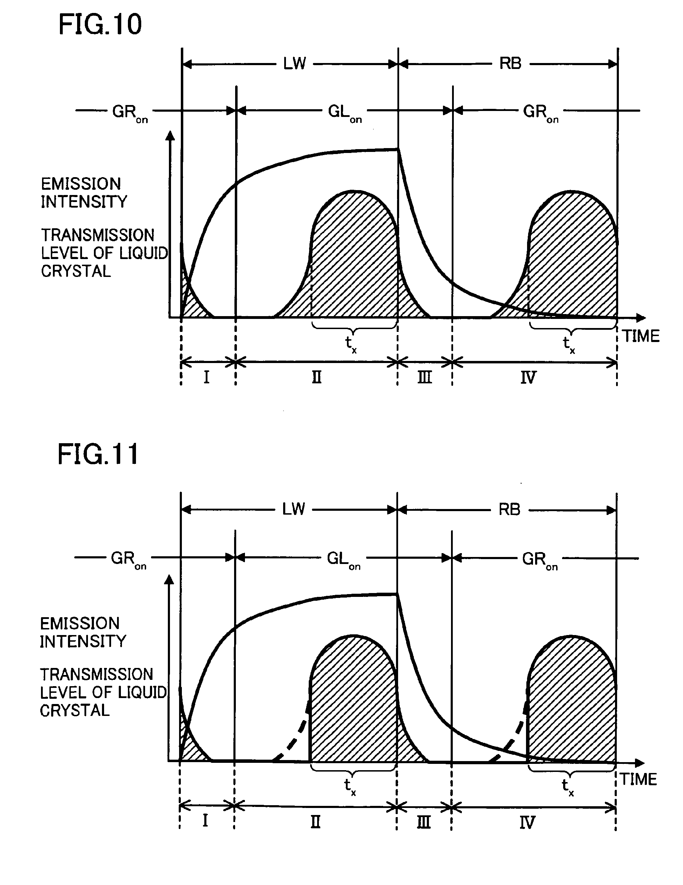

FIG. 10 is a diagram for describing that the timing of writing image data to liquid crystal is asynchronous with the timing of switching the optical shutter glasses between the light transmission mode (on) and the light non-transmission mode (off). Here, for example, white display is performed for the left eye, and black display is performed for the right eye. In FIG. 10, a reference character LW indicates that white display is performed for the left eye, a reference character RB indicates that black display is performed for the right eye, a reference character GRₒₙ indicates that the right side of the glasses is on, and a reference character GLₒₙ indicates that the left side of the glasses is on. This holds true for the description that follows. As shown in FIG. 10, the timing of starting writing data to liquid crystal differs from place to place in the liquid crystal screen. Therefore, the timing of writing data to liquid crystal is asynchronous with the timing of switching the optical shutter glasses between the light transmission mode (on) and the light non-transmission mode (off).

In a region II shown in FIG. 10, leakage light from upper regions (the region S₁ etc.) is present outside a period tₓ during which the response of liquid crystal is stable. Also in a region IV, leakage light from upper regions (the region S₁ etc.) is present outside a period tₓ during which the response of liquid crystal is stable. Therefore, in the regions II and IV, an image for one eye enters the other eye due to the leakage light.

On the other hand, FIG. 11 is a diagram for describing the timing of writing image data to liquid crystal and the timing of switching the optical shutter glasses between the light transmission mode (on) and the light non-transmission mode (off), where the turn-on timings of the regions S₁ and S₂ are delayed. In this embodiment, the turn-on timings of the LEDs of the regions S₁ and S₂ are delayed to be the same as the turn-on timing of the LED of the region S₃, whereby leakage light from the regions S₁ and S₂ into the region S₃ is reduced. Therefore, as shown in FIG. 11, light illumination during the start of response of liquid crystal can be reduced. Therefore, when the scanning backlight driving technique of this embodiment is applied to a liquid crystal display device which displays 3D video which is viewed using shutter glasses, the situation that an image for one eye enters the other eye can be reduced or prevented.

### (Fifth Embodiment)

In the fourth embodiment, the turn-on timings of the S₁ (uppermost) and S₂ regions are delayed. The present invention is not limited to such an embodiment. In a fifth embodiment, the turn-off timings of the LEDs of a plurality of regions including the lowermost region S₈ are advanced. Specifically, the turn-off timings of the regions S₈ and S₇ are advanced.

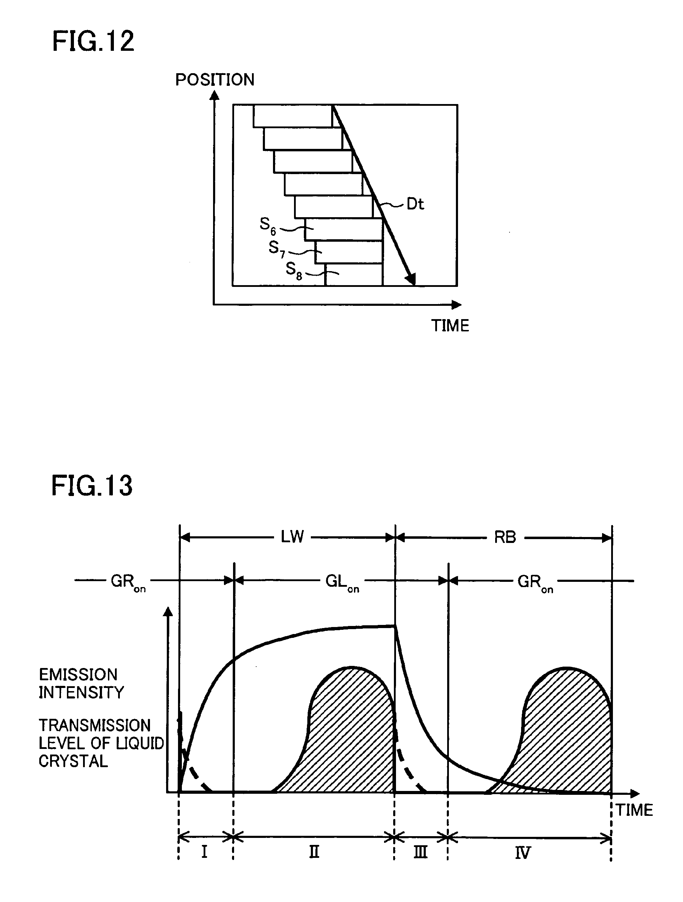

FIG. 12 is a diagram for describing a process of advancing the turn-off timings of the LEDs of the regions S₈ and S₇. As shown in FIG. 12, the turn-off timings of the LEDs of the regions S₈ and S₇ are caused to be earlier than the respective reference turn-off timings so that the turn-off timings of the LEDs of the regions S₈ and S₇ are the same as the turn-off timing of the LED of the region S₆. As a result, leakage light from the regions S₈ and S₇ into the region S₆ can be reduced, whereby the degradation of display quality can be further reduced.

Next, a case where the scanning backlight driving technique of this embodiment is applied to a liquid crystal display device which displays 3D video which is viewed using optical shutter glasses as in the fourth embodiment, will be described.

As shown in FIG. 10 described above, in the region I, the right eye of the optical shutter glasses is in the light transmission mode (on), but receives left-eye image data. In the region III, the left eye of the optical shutter glasses is in the light transmission mode (on), but receives right-eye image data. Therefore, in the regions I and III of FIG. 10, crosstalk occurs.

On the other hand, FIG. 13 is a diagram for describing the timing of writing image data to liquid crystal and the timing of switching the optical shutter glasses between the light transmission mode (on) and the light non-transmission mode (off), where the turn-off timings of the regions S₈ and S₇ are advanced. In this embodiment, the turn-off timings of the LEDs of the regions S₈ and S₇ are advanced to be the same as the turn-off timing of the LED of the region S₆, whereby leakage light from the regions S₈ and S₇ into the region S₆ is reduced. Therefore, as shown in FIG. 13, light illumination can be reduced during the end of response of liquid crystal. Therefore, although crosstalk occurs in the regions I and III of FIG. 10 as described above, in this embodiment the emission of the LEDs in the regions I and III can be reduced. Therefore, when the scanning backlight driving technique of this embodiment is applied to a liquid crystal display device which displays 3D video which is viewed using shutter glasses, the situation that inappropriate video enters the eyes due to the occurrence of crosstalk can be reduced or prevented.

### (Sixth Embodiment)

In the fourth embodiment, the turn-on timings of the regions S₁ and S₂ are delayed, and in the fifth embodiment, the turn-off timings of the regions S₈ and S₇ are advanced. The present invention is not limited to such embodiments. In a sixth embodiment, the turn-on timings of the LEDs of a plurality of regions including the uppermost region S₁ are delayed, and in addition, the turn-off timings of the LEDs of regions including the lowermost region S₈ are advanced. Specifically, the turn-on timings of the LEDs of the regions S₁ and S₂ are delayed, and in addition, the turn-off timings of the LEDs of the regions S₈ and S₇ are advanced.

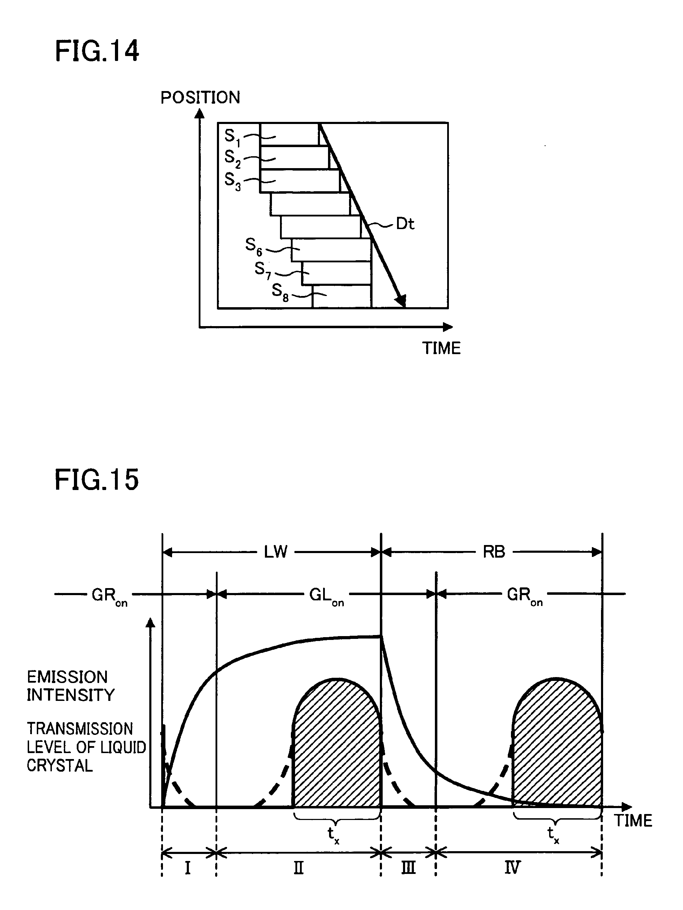

FIG. 14 is a diagram for describing a process of delaying the turn-on timings of the LEDs of the regions S₁ and S₂, and in addition, advancing the turn-off timings of the LEDs of the regions S₈ and S₇. As shown in FIG. 14, the turn-on timings of the LEDs of the regions S₁ and S₂ are caused to be later than the respective reference turn-on timings so that the turn-on timings of the LEDs of the regions S₁ and S₂ are the same as the turn-on timing of the LED of the region S₃. As a result, leakage light from the regions S₁ and S₂ into the region S₃ is reduced. The turn-off timings of the LEDs of the regions S₈ and S₇ are caused to be earlier than the respective reference turn-off timings so that the turn-off timings of the LEDs of the regions S₈ and S₇ are the same as the turn-off timing of the LED of the region S₆. As a result, leakage light from the regions S₈ and S₇ into the region S₆ is reduced. Therefore, the degradation of display quality can be more significantly reduced.

Next, a case where the scanning backlight driving technique of this embodiment is applied to a liquid crystal display device which displays 3D video which is viewed using optical shutter glasses as in the fourth and fifth embodiments, will be described.

FIG. 15 is a diagram for describing the timing of writing image data to liquid crystal and the timing of switching the optical shutter glasses between the light transmission mode (on) and the light non-transmission mode (off), where the turn-on timings of the regions S₁ and S₂ are delayed, and in addition, the turn-off timings of the regions S₈ and S₇ are advanced.

In this embodiment, the turn-on timings of the LEDs of the regions S₁ and S₂ are delayed to be the same as the turn-on timing of the LED of the region S₃, whereby leakage light from the regions S₁ and S₂ into the region S₃ is reduced. In addition, the turn-off timings of the LEDs of the regions S₈ and S₇ are advanced to be the same as the turn-on timing of the LED of the region S₆, whereby leakage light from the regions S₈ and S₇ into the region S₆ is reduced. Therefore, as shown in FIG. 15, light illumination during the start and end of response of liquid crystal can be reduced. As a result, when the scanning backlight driving technique of this embodiment is applied to a liquid crystal display device which displays 3D video which is viewed using shutter glasses, the situation that an image for one eye enters the other eye can be reduced or prevented, and the situation that inappropriate video enters the eyes due to the occurrence of crosstalk can be reduced or prevented.

### (Seventh Embodiment)

In the fourth embodiment, the turn-on timings of the regions S₁ and S₂ are delayed to be the same as the turn-on timing of the LED of the region S₃. The present invention is not limited to such an embodiment. In the seventh embodiment, the turn-on timings of the regions S₁ and S₂ are not the same as the turn-on timing of the LED of the region S₃.

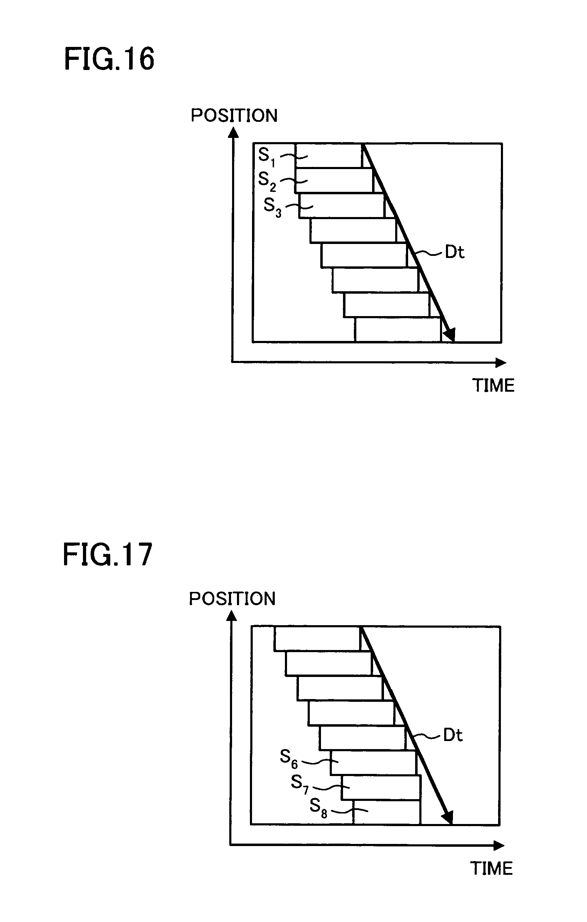

FIG. 16 is a diagram for describing a process of delaying the turn-on timings of the LEDs of the regions S₁ and S₂. In this embodiment, as shown in FIG. 16, the turn-on timings of the regions S₁ and S₂ are delayed until a timing earlier than the turn-on timing of the LED of the region S₃. The LEDs of the regions S₁ and S₂ have the same turn-on timing. In this embodiment, although leakage light into the region S₃ is less reduced than in the fourth embodiment, the amount of light emitted in the regions S₁ and S₂ can be further maintained than in the fourth embodiment.

### (Eighth Embodiment)

In the fifth embodiment, the turn-off timings of the regions S₈ and S₇ are advanced to be the same as the turn-off timing of the LED of the region S₆. The present invention is not limited to such an embodiment. In an eighth embodiment, the turn-off timings of the regions S₈ and S₇ are not the same as the turn-off timing of the LED of the region S₆.

FIG. 17 is a diagram for describing a process of advancing the turn-off timings of the LEDs of the regions S₈ and S₇. In this embodiment, as shown in FIG. 17, the turn-off timings of the regions S₈ and S₇ are advanced to a timing later than the turn-on timing of the LED of the region S₆. The LEDs of the regions S₇ and S₈ have the same turn-off timing. In this embodiment, although leakage light into the region S₆ is less reduced than in the fifth embodiment, the amount of light emitted in the regions S₈ and S₇ can be further maintained than in the fifth embodiment.

### (Ninth Embodiment)

In the seventh embodiment, the turn-on timings of the regions S₁ and S₂ are delayed, and in the eighth embodiment, the turn-off timings of the regions S₈ and S₇ are advanced. The present invention is not limited to such embodiments. In a ninth embodiment, the turn-on timings of the regions S₁ and S₂ are delayed without being the same as the turn-on timing of the LED of the region S₃, and the turn-off timings of the regions S₈ and S₇ are advanced without being the same as the turn-off timing of the LED of the region S₆.

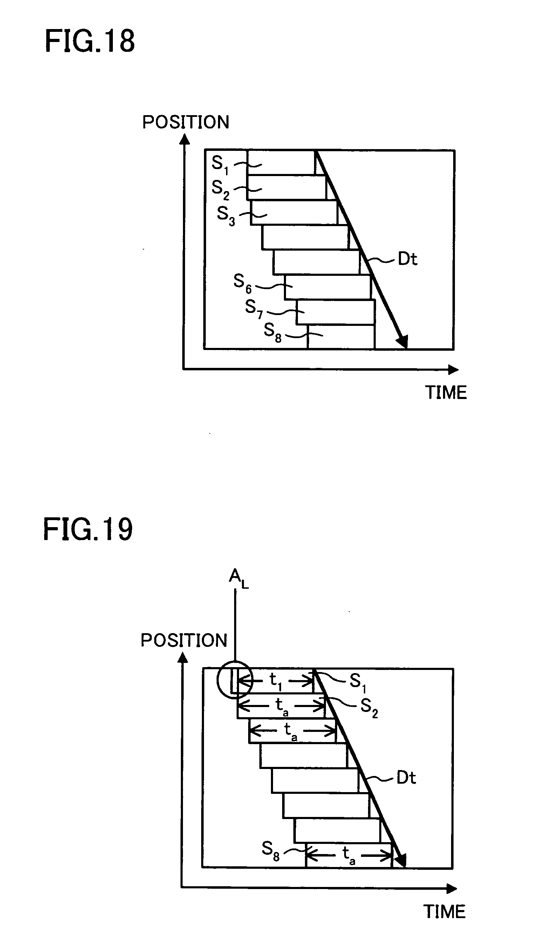

FIG. 18 is a diagram for describing a process of delaying the turn-on timings of the LEDs of the regions S₁ and S₂, and in addition, advancing the turn-off timings of the LEDs of the regions S₈ and S₇. In this embodiment, as shown in FIG. 18, the turn-on timings of the regions S₁ and S₂ are delayed until a timing earlier than the turn-on timing of the LED of the region S₃, and the turn-off timings of the regions S₈ and S₇ are advanced to a timing later than the turn-on timing of the LED of the region S₆. The LEDs of the regions S₁ and S₂ have the same turn-on timing. The LEDs of the regions S₇ and S₈ have the same turn-off timing. In this embodiment, leakage light into the region S₃ and leakage light into the region S₆ can be reduced to some extent while the amount of light emitted is maintained to some extent.

### (Tenth Embodiment)

In the first embodiment, the turn-on timing of the LED of the region S₁ is delayed, and therefore, the on period of the LED of the region S₁ is reduced, so that the amount of light emitted decreases. In this embodiment, the decrease of the amount of light emitted is reduced while the turn-on timing of the LED of the region S₁ is delayed.

FIG. 19 is a diagram for describing the decrease of the amount of light emitted in the region S₁ which occurs when the turn-on timing of the LED of the region S₁ is delayed. As described in the first embodiment, when the turn-on timing of the LED of the region S₁ is caused to be later than the reference turn-on timing, the on periods of the LEDs of the regions S₂-S₈ are uniformly an on period tₐ, and the on period of the LED of the region S₁ is t₁ shorter than tₐ. Therefore, the on period of the LED of the region S₁ is reduced, whereby the amount of light emitted is reduced by an amount corresponding to a portion A_{L} shown in FIG. 19.

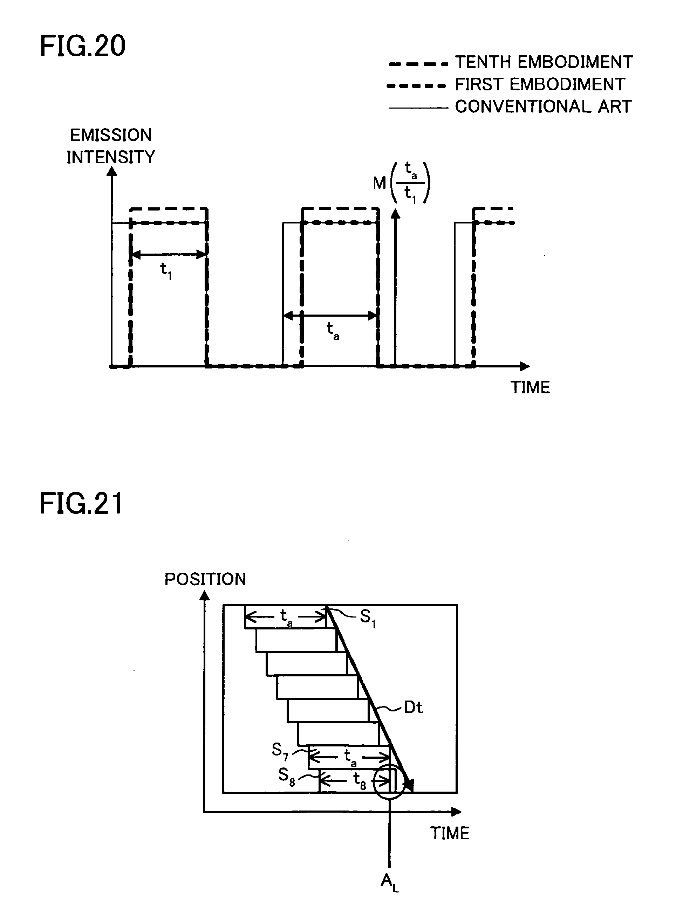

In this embodiment, the emission intensity of the LED of the region S₁ whose turn-on timing is delayed is caused to be higher than those of the other LEDs. FIG. 20 is an explanatory diagram schematically showing the emission intensity of the LED of the region S₁ in the conventional art, the emission intensity of the LED of the region S₁ in the first embodiment, and the emission intensity of the LED of the region S₁ in the tenth embodiment, for the purpose of comparison. As shown in FIG. 20, in this embodiment, while, as in the first embodiment, the turn-on timing is delayed to a further extent than in the conventional art, the emission intensity of the LED is increased by a factor of a maximum of tₐ/t₁. In FIG. 20, M(tₐ/t₁) indicates that the emission intensity of the LED is tₐ/t₁ times as high. As a result, the decrease of the amount of light emitted can be reduced or prevented while leakage light from the region S₁ into the region S₂ is reduced to reduce the degradation of display quality.

Note that it is not preferable that the emission intensity of the LED of the region S₁ be more than tₐ/t₁ times as high. This is because, if the emission intensity is more than tₐ/t₁ times as high, the demand for a reduction in the power consumption of the backlight is not satisfied, and the luminance of an end portion of the screen is emphasized, resulting in unnatural display.

### (Eleventh Embodiment)

In the second embodiment, the turn-off timing of the LED of the region S₈ is advanced, and therefore, the on period of the LED of the region S₈ is reduced, so that the amount of light emitted decreases. In this embodiment, the decrease of the amount of light emitted is reduced while the turn-off timing of the LED of the region S₈ is advanced.

FIG. 21 is a diagram for describing that when the turn-off timing of the LED of the region S₈ is advanced, the amount of light emitted in the region S₈ is reduced. As shown in FIG. 21, the turn-off timing of the LED of the region S₈ is caused to be earlier than the reference turn-off timing, the on periods of the LEDs of the regions S₁-S₇ are uniformly an on period tₐ, and the on period of the LED of the region S₈ is t₈ shorter than tₐ. Therefore, the on period of the LED of the region S₈ is reduced, whereby the amount of light emitted is reduced by an amount corresponding to a portion A_{L} shown in FIG. 21.

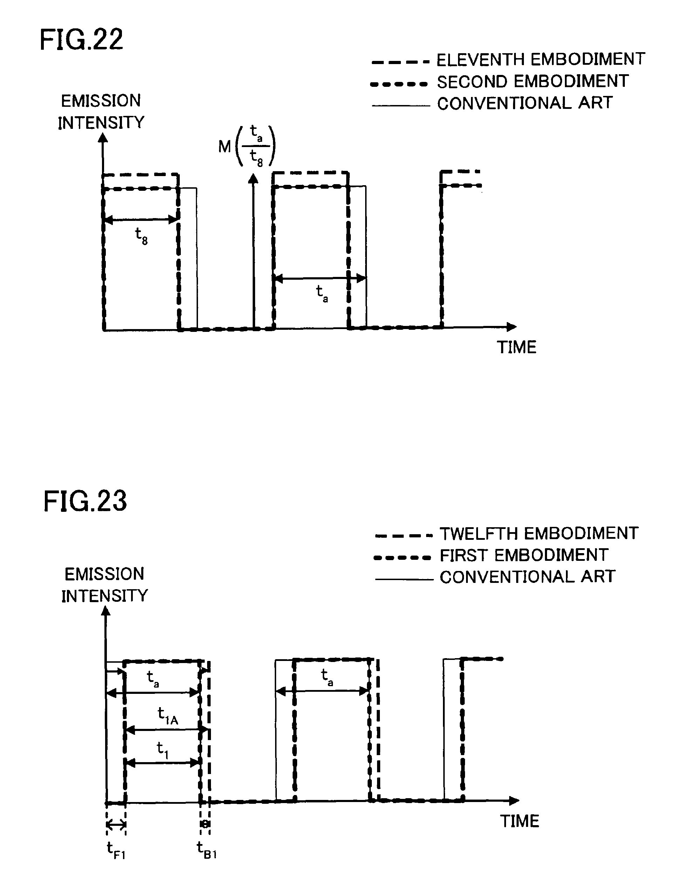

In this embodiment, the emission intensity of the LED of the region S₈ whose turn-off timing is advanced is caused to be higher than those of the other LEDs. FIG. 22 is an explanatory diagram schematically showing the emission intensity of the LED of the region S₈ in the conventional art, the emission intensity of the LED of the region S₈ in the second embodiment, and the emission intensity of the LED of the region S₈ in the eleventh embodiment, for the purpose of comparison. As shown in FIG. 22, in this embodiment, while, as in the second embodiment, the turn-off timing is advanced to a further extent than in the conventional art, the emission intensity of the LED is increased by a factor of a maximum of tₐ/t₈. In FIG. 22, M(tₐ/t₈) indicates that the emission intensity of the LED is tₐ/t₈ times as high. As a result, the decrease of the amount of light emitted can be reduced or prevented while leakage light from the region S₈ into the region S₇ is reduced to reduce the degradation of display quality. Note that, for a reason similar to that described in the tenth embodiment, it is not preferable that the emission intensity of the LED of the region S₈ be more than tₐ/t₈ times as high.

### (Twelfth Embodiment)

In the tenth embodiment, the decrease of the amount of light emitted due to the reduction of the on period of the LED of the region S₁ is reduced by increasing the emission intensity of the LED. The present invention is not limited to such an embodiment. In this embodiment, while the turn-on timing of the LED of the region S₁ is delayed, the decrease of the amount of light emitted is reduced by using a configuration different from that of the tenth embodiment.

FIG. 23 is an explanatory diagram schematically showing the emission intensity of the LED of the region S₁ in the conventional art, the emission intensity of the LED of the region S₁ in the first embodiment, and the emission intensity of the LED of the region S₁ in the twelfth embodiment, for the purpose of comparison. As shown in FIG. 23, in this embodiment, as in the first embodiment, the turn-on timing of the LED of the region S₁ is caused to be later than the reference turn-on timing, and the turn-off timing is caused to be later than the turn-off timings of the LEDs of the other regions (the regions S₂-S₈). Because the turn-on timing is delayed, the on period decreases, and therefore, the amount of light emitted decreases. However, in this embodiment, the on period is extended by delaying the turn-off timing, whereby the decrease of the amount of light emitted can be reduced.

In this embodiment, a time t_{B1} by which the turn-off timing is delayed is preferably shorter than a time t_{F1} by which the turn-on timing of the region S₁ is delayed. In other words, the on period t_{1A} of the LED of the region S₁ of this embodiment is preferably longer than the on period t₁ of the LED of the region S₁ of the first embodiment and shorter than the on periods tₐ of the LEDs of the regions S₂-S₈. This is because, if the time t_{B1} by which the turn-off timing is delayed is longer than the time t_{F1} by which the turn-on timing is delayed, the demand for a reduction in the power consumption of the backlight is not satisfied, and the luminance of an end portion of the screen is emphasized, resulting in unnatural display.

### (Thirteenth Embodiment)

In the eleventh embodiment, the decrease of the amount of light emitted due to the reduction of the on period of the LED of the region S₈ is reduced by increasing the emission intensity of the LED. The present invention is not limited to such an embodiment. In this embodiment, while the turn-off timing of the LED of the region S₈ is advanced, the decrease of the amount of light emitted is reduced by a configuration different from that of the eleventh embodiment.

FIG. 24 is an explanatory diagram schematically showing the emission intensity of the LED of the region S₈ in the conventional art, the emission intensity of the LED of the region S₈ in the second embodiment, and the emission intensity of the LED of the region S₈ in the thirteenth embodiment, for the purpose of comparison. As shown in FIG. 24, in this embodiment, as in the second embodiment, the turn-off timing of the LED of the region S₈ is caused to be earlier than the reference turn-off timing, and the turn-on timing is caused to be earlier than the turn-on timings of the LEDs of the other regions (the regions S₁-S₇). Because the turn-off timing is advanced, the on period decreases, and therefore, the amount of light emitted decreases. However, in this embodiment, the on period is extended by advancing the turn-on timing, whereby the decrease of the amount of light emitted can be reduced.

In this embodiment, a time t_{F2} by which the turn-on timing is advanced is preferably shorter than a time t_{B2} by which the turn-off timing is advanced. In other words, the on period t_{8A} of the LED of the region S₈ of this embodiment is preferably longer than the on period t₈ of the LED of the region S₈ of the second embodiment and shorter than the on periods tₐ of the LEDs of the regions S₁-S₇. This is because, if the time t_{F2} by which the turn-on timing is advanced is longer than the time t_{B2} by which the turn-off timing is advanced, the demand for a reduction in the power consumption of the backlight is not satisfied, and the luminance of an end portion of the screen is emphasized, resulting in unnatural display.

### (Other Embodiments)

In the tenth embodiment, the emission intensity of the LED of the region S₁ is increased by a factor of a maximum of tₐ/t₁, and in the eleventh embodiment, the emission intensity of the LED of the region S₈ is increased by a factor of a maximum of tₐ/t₈. The present invention is not limited to such embodiments. Alternatively, for example, the emission intensity of the LED of the region S₁ may be increased by a factor of a maximum of tₐ/t₁, and in addition, the emission intensity of the LED of the region S₈ may be increased by a factor of a maximum of tₐ/t₈.

In the twelfth embodiment, the turn-off timing of the LED of the region S₁ is delayed, and in the thirteenth embodiment, the turn-on timing of the LED of the region S₈ is advanced. The present invention is not limited to such embodiments. Alternatively, for example, the turn-off timing of the LED of the region S₁ is delayed, and in addition, the turn-on timing of the LED of the region S₈ is advanced.

In the above embodiments, the backlight 150 includes a plurality of direct-type LEDs. Alternatively, the backlight 150 may include a plurality of cold cathode fluorescent lamps.

### INDUSTRIAL APPLICABILITY

The present invention is applicable to a liquid crystal display device employing a scanning backlight scheme, and a liquid crystal display device which displays 3D video which is viewed using optical shutter glasses.

### DESCRIPTION OF REFERENCE CHARACTERS

- 111: ARRAY SUBSTRATE
- 112: COUNTER SUBSTRATE
- 113: DATA LINE
- 114: SCANNING LINE
- 115: PIXEL ELECTRODE
- 116: THIN FILM TRANSISTOR
- 125: STORAGE CAPACITOR
- 126: LIQUID CRYSTAL LAYER
- 130: CONTROL CIRCUIT
- 132: DRIVE VOLTAGE TIMING CONTROL CIRCUIT
- 133: DATA DRIVER
- 134: GATE DRIVER
- 137: DATA LINE DRIVE CIRCUIT
- 138: SCANNING LINE DRIVE CIRCUIT
- 150: BACKLIGHT
- 151-158: LED
- 210: OPTICAL SHUTTER GLASSES
- 211: OPTICAL SHUTTER GLASSES CONTROL CIRCUIT
- 221: SYNCHRONIZATION SIGNAL
- 222: SHUTTER GLASSES CONTROL SIGNAL
- 900: LIQUID CRYSTAL DISPLAY DEVICE

## Claims

1. A liquid crystal display device with a scanning backlight scheme including a light source having a plurality of light emitting units configured to illuminate a plurality of respective regions S₁-Sₙ obtained by dividing an image formation region, corresponding to scanning lines, where the region S₁ corresponds to the uppermost scanning line, the Sₙ region corresponds to the lowermost scanning line, n is a natural number of three or more, and the light emitting units corresponding to the respective regions are turned on on a region-by-region basis during respective predetermined on periods between respective reference turn-on timings and respective reference turn-off timings of the light emitting units in synchronization with respective timings of writing image data, the device comprising:
a timing controller configured to perform a delayed turn-on process of causing turn-on timings of the light emitting units of the regions S₁-Sᵢ, where i is a natural number of 1 ≤ i < n, to be later than the respective reference turn-on timings, or an advanced turn-off process of causing turn-off timings of the light emitting units of the regions Sₙ-Sⱼ, where j is a natural number of 1 ≤ i < j ≤ n, to be earlier than the respective reference turn-off timings.

2. The liquid crystal display device of claim 1, wherein
in the delayed turn-on process, the timing controller delays the turn-on timings of the light emitting units of the regions S₁-Sᵢ so that the turn-on timings of the light emitting units of the regions S₁-Sᵢ are the same as the turn-on timing of the light emitting unit of the Sᵢ₊₁ region.

3. The liquid crystal display device of claim 1 or 2, wherein
in the advanced turn-off process, the timing controller advances the turn-off timings of the light emitting units of the Sₘ-Sⱼ regions so that the turn-off timings of the light emitting units of the regions Sₙ-Sⱼ are the same as the turn-off timing of the light emitting unit of the Sⱼ₋₁ region.

4. The liquid crystal display device of any one of claims 1-3, wherein
i is one.

5. The liquid crystal display device of any one of claims 1-4, wherein
j is n.

6. The liquid crystal display device of any one of claims 1-5, wherein
the timing controller causes emission intensities of the light emitting units of the regions S₁-Sᵢ to be higher than emission intensities of the light emitting units of the other regions.

7. The liquid crystal display device of claim 6, wherein
the emission intensity of the light emitting unit of the Sᵢ region is a maximum of tₐ/tᵢ times as high as the emission intensities of the light emitting units of the other regions, where tₐ is the predetermined on period, and tᵢ is an on period of the light emitting unit of the Sᵢ region.

8. The liquid crystal display device of any one of claims 1-7, wherein
the timing controller causes emission intensities of the light emitting units of the regions Sₙ-Sⱼ to be higher than emission intensities of the light emitting units of the other regions.

9. The liquid crystal display device of claim 8, wherein
the emission intensity of the light emitting unit of the Sⱼ region is a maximum of tₐ/tⱼ times as high as the emission intensities of the light emitting units of the other regions, where tₐ is the predetermined on period, and tᵢ is an on period of the light emitting unit of the Sⱼ region.

10. The liquid crystal display device of any one of claims 1-5, wherein
the timing controller causes the turn-off timings of the light emitting units of the regions S₁-Sᵢ to be later than the respective reference turn-off timings.

11. The liquid crystal display device of claim 10, wherein
times by which the turn-off timings of the light emitting units of the regions S₁-Sᵢ are delayed are shorter than respective times by which the turn-on timings of the light emitting units of the regions S₁-Sᵢ are delayed.

12. The liquid crystal display device of any one of claims 1-7, wherein
the timing controller causes the turn-on timings of the light emitting units of the regions Sₙ-Sⱼ to be earlier than the respective reference turn-on timings.

13. The liquid crystal display device of claim 12, wherein
times by which the turn-on timings of the light emitting units of the regions Sₙ-Sⱼ are advanced are shorter than respective times by which the turn-off timings of the light emitting units of the regions Sₙ-Sⱼ are advanced.

14. A method for controlling a scanning backlight in a liquid crystal display device including a light source having a plurality of light emitting units configured to illuminate a plurality of respective regions S₁-Sₙ obtained by dividing an image formation region, corresponding to scanning lines, where the region S₁ corresponds to the uppermost scanning line, the Sₙ region corresponds to the lowermost scanning line, n is a natural number of three or more, and the light emitting units corresponding to the respective regions are turned on on a region-by-region basis during respective predetermined on periods between respective reference turn-on timings and respective reference turn-off timings of the light emitting units in synchronization with respective timings of writing image data,
wherein
a delayed turn-on process of causing turn-on timings of the light emitting units of the regions S₁-Sᵢ, where i is a natural number of 1 ≤ i < n, to be later than the respective reference turn-on timings, or an advanced turn-on process of causing turn-off timings of the light emitting units of the regions Sₙ-Sⱼ, where j is a natural number of 1 ≤ i < j ≤ n, to be earlier than the respective reference turn-off timings, is performed.
